# EUROPEAN PATENT SPECIFICATION

(11) **EP 4 098 475 B1**
(45) Date of publication and mention of the grant of the patent: **11.11.2026**
(21) Application number: 20916387.2
(22) Date of filing: 16.12.2020
(51) Int. Cl.: B60L 15/40, B61L 25/06, H04N 19/85, G06T 7/00, H04N 7/18

(54) **FACILITY DIAGNOSIS SYSTEM**
EINRICHTUNGSDIAGNOSESYSTEM
SYSTÈME DE DIAGNOSTIC D'INSTALLATION

(30) Priority: 31.01.2020 JP 2020015402
(43) Date of publication of application: 07.12.2022
(73) Proprietor: Kabushiki Kaisha Toshiba, Minato-ku Tokyo (JP)
(72) Inventor: SETO Naoto, Kawasaki-shi, Kanagawa 212-0013 (JP); KOBAYASHI Hiroyuki, Kawasaki-shi, Kanagawa 212-0013 (JP); TAKAHASHI Yusuke, Kawasaki-shi, Kanagawa 212-0013 (JP); YAMASAKI Yoshiaki, Kawasaki-shi, Kanagawa 212-0013 (JP); HORIE Masahiro, Kawasaki-shi, Kanagawa 212-0013 (JP); FUTAGAMI Takuya, Kawasaki-shi, Kanagawa 212-0013 (JP); HATTORI Yohei, Kawasaki-shi, Kanagawa 212-0013 (JP); ITO Hiroaki, Kawasaki-shi, Kanagawa 212-0013 (JP); KATO Noriyasu, Kawasaki-shi, Kanagawa 212-0013 (JP); HORIGUCHI Kazutoshi, Kawasaki-shi, Kanagawa 212-0013 (JP)
(74) Representative: AWA Sweden AB
(86) International application number: PCT/JP2020/047002
(87) International publication number: WO 2021/153068

(56) References cited:
- WO-A1-2019/163556
- JP-A- 2007 124 088
- JP-A- 2010 063 260
- JP-A- 2014 092 875
- JP-A- 2019 191 961
- US-A1- 2019 039 633
- US-A1- 2020 378 900

## Description

### [Technical Field]

Embodiments according to the present invention relate to an equipment diagnosing system.

### [Background Art]

If there is an abnormality in railroad equipment installed on the ground, a railroad administrator has to be notified of the abnormality immediately. For this purpose, for example, there is a method that checks for abnormalities in railroad equipment by shooting and storing a video containing the railroad equipment by a forward-facing camera mounted on a railroad car, and an observer watching the video.

However, the method described above requires considerable time and effort because the observer needs to watch the video to check for abnormalities in railroad equipment.

US 2019/0039633 A1 and WO 2019/163556 A1 relate to devices and methods for detecting anomalies in railroad tracks.

### [Citation List]

### [Patent Literature]

[Patent Literature 1] Japanese Patent Laid-Open No. 2005-217937
[Patent Literature 2] Japanese Patent Laid-Open No. 3-250103

### [Summary of Invention]

### [Technical Problem]

An object of the present invention is to provide an equipment diagnosing system that is able to detect abnormalities in railroad equipment more efficiently.

### [Solution to Problem]

An equipment diagnosing system according to the present embodiment includes a video shooting unit, a position measuring unit, an encoding unit, a first video decoding unit, an image selecting unit, a second video decoding unit, and an image comparing unit. The video shooting unit is mounted on a railroad car and shoots a video of a piece of railroad equipment installed along a travel path of the railroad car. The position measuring unit measures a car position of the railroad car while the railroad car is running. The encoding unit associates the video shot by the video shooting unit with the car position and encodes the video. The first video decoding unit decodes a first video extracted from the encoded video, the first video including the piece of railroad equipment to be diagnosed. The image selecting unit selects, based on a first car position associated with the first video, a selected image of the piece of railroad equipment to be diagnosed from the encoded video previously stored in a video storage unit in association with the car position. The second video decoding unit decodes a second video of the piece of railroad equipment to be diagnosed corresponding to the selected image. The image comparing unit calculates motion vectors between the selected image included in the decoded first video and a second image included in the decoded second video, and diagnoses an abnormality in the piece of railroad equipment based on the motion vectors.

The image comparing unit determines that the piece of railroad equipment to be diagnosed is abnormal if absolute values of the motion vectors, which increase as the railroad car (RV) approaches the piece of railroad equipment, are equal to or larger than a predetermined value for a predetermined period of time.

### [Brief Description of Drawings]

[Figure 1] Figure 1 is a block diagram illustrating a configuration of an equipment diagnosing system according to a first embodiment.
[Figure 2] Figure 2 is a block diagram illustrating a configuration of an encoder according to the first embodiment.
[Figure 3] Figure 3 is a flow diagram illustrating the operation of the encoder according to the first embodiment.
[Figure 4] Figure 4 is a block diagram illustrating a configuration of a ground diagnosing device according to the first embodiment.
[Figure 5] Figure 5 is a diagram illustrating an example of calculating motion vectors.
[Figure 6] Figure 6 is a diagram illustrating an exemplary method of abnormality determination.
[Figure 7] Figure 7 is a flow diagram illustrating the operation of a monitoring video reading unit, a reference video reading unit, and a decoded image determining unit according to the first embodiment.
[Figure 8] Figure 8 is a flow diagram illustrating the operation of an image comparing unit and a result storage controlling unit according to the first embodiment.
[Figure 9] Figure 9 is a flow diagram illustrating the operation of a monitoring video reading unit, a reference video reading unit, and a decoded image determining unit according to a second embodiment.
[Figure 10] Figure 10 is a block diagram illustrating a configuration of an encoder according to a third embodiment.

### [Description of Embodiments]

Embodiments according to the present invention will be described below with reference to the drawings. The embodiments are not intended to limit the present invention. The drawings are schematic or conceptual, and ratios of each part or the like may not necessarily be drawn to scale. In the specification and drawings, elements similar to those previously described in another figure are marked with the same reference signs and detailed descriptions of the elements are omitted where appropriate.

### (First Embodiment)

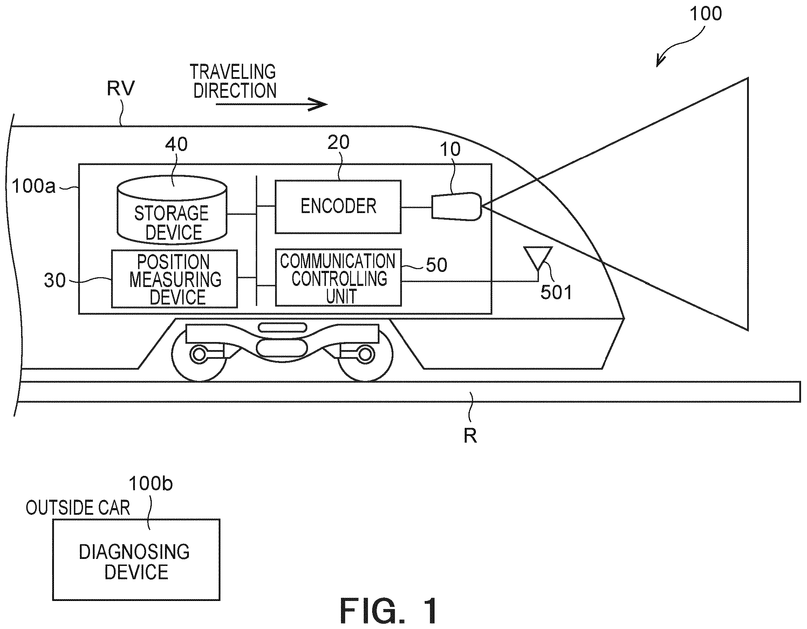

Figure 1 is a block diagram illustrating a configuration of an equipment diagnosing system 100 according to a first embodiment. The equipment diagnosing system 100 diagnoses the condition of railroad equipment. The railroad equipment includes, for example, railroad signs. It is noted that the equipment diagnosing system 100 is not limited to railroads, but may also diagnose equipment in other vehicle systems such as buses and streetcars, for example.

The equipment diagnosing system 100 includes an on-board diagnosing device 100a mounted on a railroad car RV, and a ground diagnosing device 100b.

The railroad car RV runs on a track R. The railroad car RV can also transmit and receive data to and from the ground diagnosing device 100b by wireless communication or the like.

The on-board diagnosing device 100a includes a camera 10, an encoder 20, a position measuring device 30, a storage device 40, and a communication controlling unit 50.

The camera 10, as a video shooting unit, is installed in the railroad car RV. The camera 10 is installed, for example, facing the direction of travel (forward direction) of the railroad car RV. The camera 10 shoots a video of railroad equipment installed along the travel path (track R) of the railroad car RV. For example, the camera 10 shoots a video including railroad equipment installed on the ground while the railroad car RV is running on the track R. The type of camera is not particularly limited. Preferably, the camera 10 can shoot high resolution videos. The camera 10 transmits the shot video to the encoder 20.

The position measuring device 30, as a position measuring unit, measures the car position (position information) of the running railroad car RV. For example, the position measuring device 30 measures the position information of the railroad car RV and transmits the measured position information to the encoder 20. The position measuring device 30 is, for example, a Global Navigation Satellite System (GNSS) device. The GNSS device receives radio waves from multiple satellites by its antennas to measure the position information of the railroad car RV. When the railroad car RV is in a tunnel, for example, the GNSS device cannot receive radio waves from the satellites. Therefore, the position measuring device 30 may use, in combination with the GNSS device, another device that measures the car position (position information) of the railroad car RV based on the output of a rate generator (tachogenerator) provided on an axle of the railroad car RV. This allows interpolation of position information while the railroad car RV is running in a tunnel.

Alternatively, the position measuring device 30 may include and use, in combination with or instead of the GNSS device, another device that measures the car position (position information) of the railroad car RV by using an accelerometer or gyro sensor to detect acceleration in the direction of travel of the railroad car RV and calculating the second order integral of the acceleration to obtain the position.

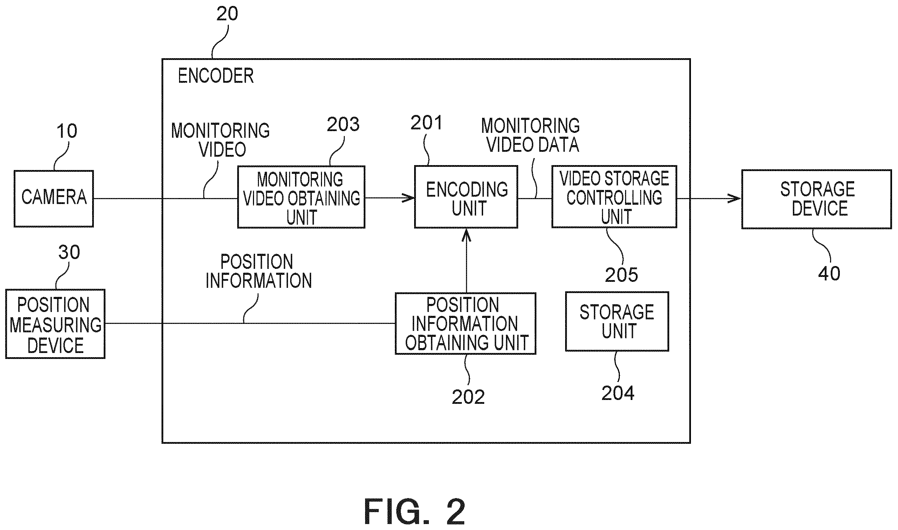

The encoder 20 generates monitoring video data, for example, by encoding a video (monitoring video) of the vies ahead of the railroad car RV shot by the camera 10 in units of image frames to generate encoded image frames, and adding position information measured by the position measuring device 30 to these encoded image frames. The encoder 20 may also add at least one of time information and weather information as additional information to the monitoring video data, as described below. The encoder 20 may obtain the time information, for example, from the position measuring device 30. The encoder 20 may be, for example, a computer device. Details of the encoder 20 will be described below with reference to Figure 2.

The storage device 40 stores monitoring video data including a monitoring video encoded by the encoder 20.

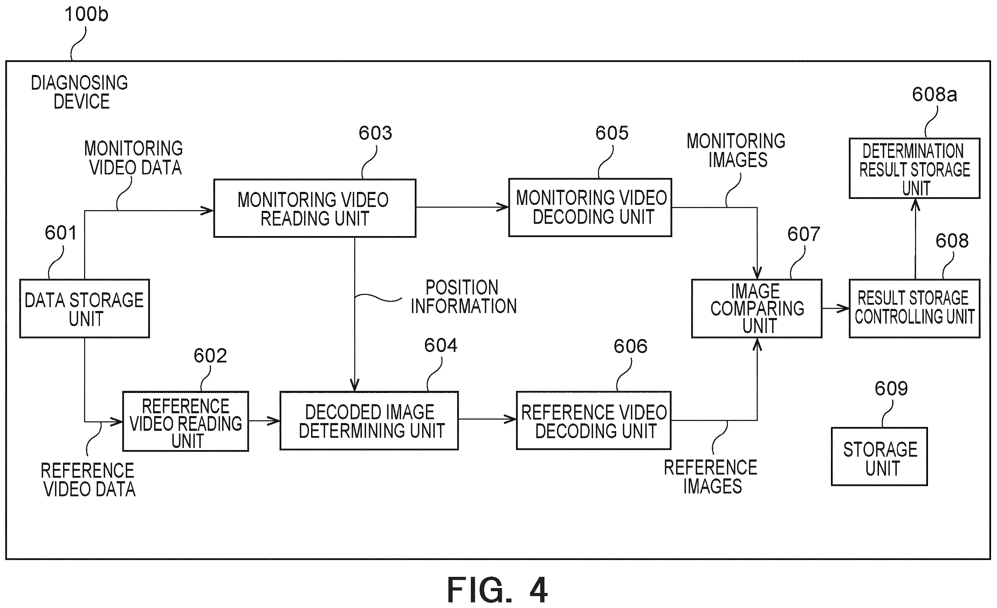

The ground diagnosing device 100b diagnoses the condition, e.g., normal or abnormal condition, of railroad equipment. The ground diagnosing device 100b, for example, diagnoses ground equipment by simultaneously playing back and comparing reference video data stored in advance and monitoring video shot by the camera 10. Details of the ground diagnosing device 100b will be described below with reference to Figure 4.

Details of the encoder 20 is now described.

Figure 2 is a block diagram illustrating a configuration of the encoder 20 according to the first embodiment.

The encoder 20 includes a position information obtaining unit 202, a monitoring video obtaining unit 203, an encoding unit 201, video storage controlling unit 205, and storage unit 204.

Some or all of the encoding unit 201, the position information obtaining unit 202, the monitoring video obtaining unit 203, and the video storage controlling unit 205 are implemented by a processor such as a central processing unit (CPU) of the railroad car RV executing software stored in the storage unit 204. Alternatively, some or all of the encoding unit 201, the position information obtaining unit 202, the monitoring video obtaining unit 203, and the video storage controlling unit 205 may be implemented by hardware that is a circuit board such as a large scale integration (LSI), an application specific integrated circuit (ASIC), and a field programmable gate array (FPGA).

The position information obtaining unit 202 obtains the position information of the running railroad car RV from the position measuring device 30.

The monitoring video obtaining unit 203 obtains, as a monitoring video, a video shot by the camera 10 while the railroad car RV is running.

The encoding unit 201 associates the monitoring video shot by the camera 10 with the position information. The encoding unit 201 also encodes the monitoring video. The encoding unit 201 compresses the video, for example, by using inter-frame prediction, quantization, or the like. A video compression scheme, for example, H.264 or H.265 may be used.

The video storage controlling unit 205 stores the monitoring video data in the storage device 40. The communication controlling unit 50 reads the monitoring video data stored in the storage device 40 and transmits the data to the ground diagnosing device 100b installed outside the railroad car via a wireless communication unit 501. Alternatively, the communication controlling unit 50 may receive the monitoring video data directly from the encoding unit 201, instead of reading the monitoring video data from the storage device 40.

The storage unit 204 stores various information such as programs executed by a processor of the on-board diagnosing device 100a. The storage unit 204 is implemented, for example, by a random access memory (RAM), a read only memory (ROM), or a flash memory.

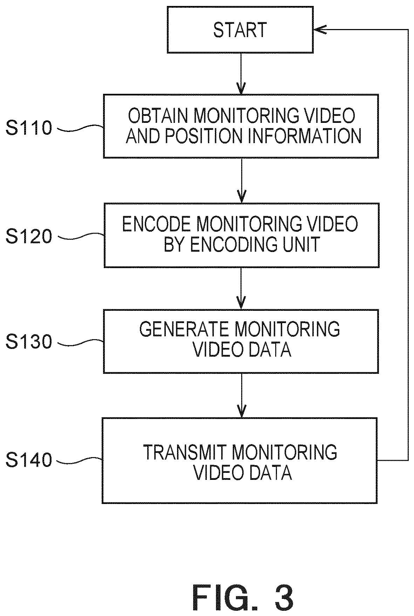

Figure 3 is a flow diagram illustrating the operation of the encoder 20 according to the first embodiment.

In step S110, the monitoring video obtaining unit 203 and the position information obtaining unit 202 obtain a monitoring video from the camera 10 and position information from the position measuring device 30, respectively. In step S120, the encoding unit 201 encodes the monitoring video for each image frame to generate encoded image frames. In step S130, the encoding unit 201 associates each encoded image frame with the position information to generate monitoring video data. The encoding unit 201 then stores this generated monitoring video data in a predefined data format. After that, the monitoring video data is stored in the storage device 40 by the video storage controlling unit 205. The monitoring video data stored in the storage device 40 may also be stored on an external storage medium such as a memory card and an external hard disk drive (HDD) and copied to the ground diagnosing device 100b.

In step S140, the communication controlling unit 50 reads the monitoring video data from the storage device 40 and transmits the data from the wireless communication unit 501 to the ground diagnosing device 100b through a wireless communication network such as a mobile phone network. After step S140, step S110 is performed again.

Details of the ground diagnosing device 100b is now described.

Figure 4 is a block diagram illustrating a configuration of the ground diagnosing device 100b according to the first embodiment.

The ground diagnosing device 100b includes a data storage unit 601, a reference video reading unit 602, a monitoring video reading unit 603, a decoded image determining unit 604, a monitoring video decoding unit 605, a reference video decoding unit 606, an image comparing unit 607, a result storage controlling unit 608, a diagnostic result storage unit 608a, and a storage unit 609.

Some or all of the data storage unit 601, the reference video reading unit 602, the monitoring video reading unit 603, the decoded image determining unit 604, the monitoring video decoding unit 605, the reference video decoding unit 606, the image comparing unit 607, and the result storage controlling unit 608 are implemented by a processor such as a CPU of the ground diagnosing device 100b executing software stored in the storage unit 609. Alternatively, some or all of the data storage unit 601, the reference video reading unit 602, the monitoring video reading unit 603, the decoded image determining unit 604, the monitoring video decoding unit 605, the reference video decoding unit 606, the image comparing unit 607, and the result storage controlling unit 608 may be implemented by hardware that is a circuit board such as an LSI, an ASIC, and an FPGA.

The data storage unit 601 stores monitoring video data received from the on-board diagnosing device 100a, as well as multiple pieces of reference video data including railroad equipment installed on the ground and previously shot by the forward-facing camera 10 mounted on the railroad car RV running on different sections of the railroad at different times.

The monitoring video reading unit 603 reads monitoring video data from the data storage unit 601. More particularly, the monitoring video reading unit 603 reads monitoring video data shot while the railroad car RV is running on a certain section of the railroad at a certain time during normal operation. The monitoring video reading unit 603 extracts position information added to the encoded image frames of the read monitoring video data, reads reference video data of the section of the railroad corresponding to this position information from the data storage unit 601, and transmits the data to the reference video reading unit 602. The monitoring video reading unit 603 transmits the position information extracted from the monitoring video data to the decoded image determining unit 604. The decoded image determining unit 604 determines a portion of the reference video data to be played back based on the position information received from the monitoring video reading unit 603, and makes adjustments so that the positions of the decoding points of the encoded monitoring video data and the reference video data will be the same.

The monitoring video decoding unit 605, as a first video decoding unit, decodes the encoded monitoring video data received from the monitoring video reading unit 603. That is, the monitoring video decoding unit 605 decodes a monitoring video extracted from the encoded monitoring video and including railroad equipment to be diagnosed. The monitoring video decoding unit 605 obtains a plurality of decoded monitoring images (image frames). The monitoring video decoding unit 605 transmits the monitoring images (image frames) to the image comparing unit 607.

The reference video reading unit 602 reads a reference video from the data storage unit 601.

The decoded image determining unit 604, as an image selecting unit, determines a position from which the reference video data should be decoded based on position information (first position information) associated with encoded image frames obtained from the monitoring video. This results in determination of a position where a comparison is made by the image comparing unit 607 between a plurality of frames obtained by decoding the encoded monitoring video data and a plurality of frames obtained by decoding the reference video data. For example, if the decoded image determining unit 604 determines that a certain station is the start position of playback, the encoded monitoring video data and the reference video data are decoded with reference to the station, respectively. The image comparing unit 607 detects changes in the railroad equipment by comparing the decoded image frames. That is, the decoded image determining unit 604 selects, based on the first position information, selected images of the railroad equipment to be diagnosed from the encoded reference video previously stored in the video storage unit (data storage unit 601). The selected images serve as a reference image for comparison by the image comparing unit 607.

The reference video decoding unit 606, as a second video decoding unit, decodes a second video (reference video) of the railroad equipment to be diagnosed corresponding to the selected images. For example, the reference video decoding unit 606 decodes the reference video data. The reference video decoding unit 606 obtains a plurality of decoded reference images (image frames). The reference video decoding unit 606 transmits the reference images to the image comparing unit 607.

The image comparing unit 607 calculates motion vectors between first image frames (monitoring images) included in the decoded monitoring video and second image frames (reference images) included in the decoded reference video. A motion vector indicates a motion (amount of displacement) from a reference frame. The image comparing unit 607 also diagnoses abnormalities in the railroad equipment based on the motion vectors. This enables efficient detection of abnormalities in railroad equipment.

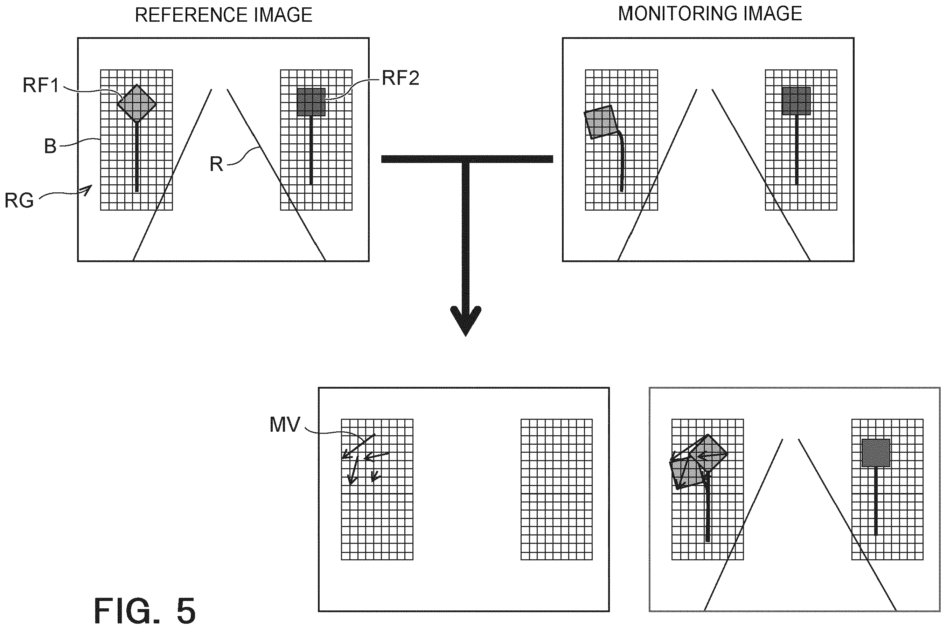

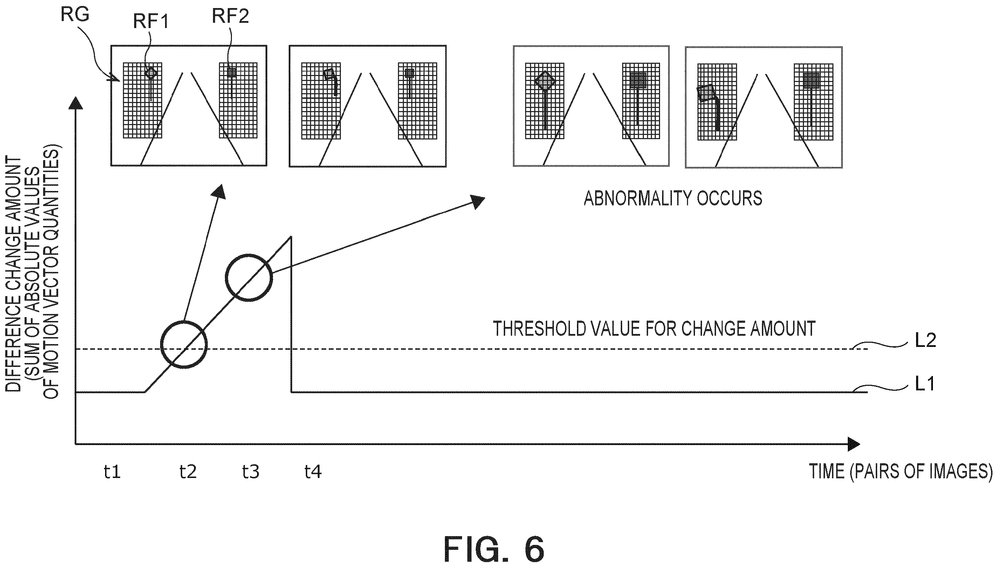

More particularly, the image comparing unit 607 calculates motion vectors with the car position associated with the monitoring images corresponding to the car position associated with the reference images. For example, the image comparing unit 607 plays back the first image frames (monitoring video) and the second image frames (reference video) side by side and compares the first image frames and the second image frames to calculate motion vectors. In some cases, however, it may not be possible to compare image frames accurately because the running speed of the railroad car RV in the monitoring video is not always the same as that in the reference video. Therefore, the image comparing unit 607 adjusts the playback speeds of those videos so that the respective car positions are close to each other. This allows for more accurate comparison of image frames. Details of diagnosis of railroad equipment by the image comparing unit 607 will be described below with reference to Figure 5 and Figure 6.

The result storage controlling unit 608 stores the car position corresponding to a piece of railroad equipment determined to be abnormal in the diagnostic result storage unit 608a. This enables a user to watch a video of the piece of railroad equipment determined to be abnormal based on the position information. As a result, the user can easily recognize the abnormality in the railroad equipment and go straight to the site of the abnormality. The result storage controlling unit 608 may store the diagnostic result of the image comparing unit 607 in the diagnostic result storage unit 608a. The diagnostic result includes, for example, information on whether the railroad equipment is abnormal or normal. Although, in the example shown in Figure 4, the diagnostic result storage unit 608a is provided in the ground diagnosing device 100b, it may be provided outside the ground diagnosing device 100b.

The storage unit 609 stores various information such as programs executed by the processor of the ground diagnosing device 100b. The storage unit 609 is implemented, for example, by a RAM, a ROM, or a flash memory.

Details of abnormality determination by using motion vectors is now described.

Figure 5 is a diagram illustrating an example of calculating motion vectors. RF1 and RF2 indicate pieces of railroad equipment. More specifically, RF1 and RF2 are signs. RG indicates monitoring areas. The monitoring areas RG are predefined fixed areas in an image. The monitoring areas RG are predefined at positions where the railroad equipment is displayed in an image. B indicates blocks. The blocks B divide the monitoring areas RG. Each of the blocks B arranged in a grid pattern is, for example, a rectangular block (macro block) consisting of a unit of 8 x 8 pixels, a unit of 16 x 16 pixels, or the like.

The upper part of Figure 5 shows a pair of first and second image frames to be compared. In the example shown in Figure 5, one of a plurality of pairs is shown. The lower right part of Figure 5 shows a view in which the first and second image frames are overlaid on each other. Motion vectors MV are also shown. The lower left part of Figure 5 shows a view of the motion vectors MV extracted from the view in the lower right part of the figure.

The image comparing unit 607 calculates motion vectors, for example, by using a block matching method used for inter-frame prediction. The image comparing unit 607 searches for similar blocks between the first image frame and the second image frame for each of the divided blocks B. For example, the image comparing unit 607 searches for blocks between which the luminance difference is the smallest. The image comparing unit 607 calculates the displacement between each pair of similar blocks B as a motion vector.

In the example shown in Figure 5, the sign RF1 in the second image frame is normal. However, the sign RF1 in the first image frame is bent. Thus, finite motion vectors MV are calculated. In contrast, the sign RF2 in the first image frame remains normal with little change from the second image frame. Thus, motion vectors MV for the sign RF2 are almost zero.

The image comparing unit 607 calculates a motion vector for each of the multiple blocks B that divide the monitoring areas RG in the first image frame and the second image frame. The monitoring areas RG are areas in image frames where the railroad equipment is displayed from the time when the railroad equipment is displayed in the image frames for the first time until the railroad car RV passes the railroad equipment. The monitoring areas RG are predefined fixed areas. The blocks B are regions defined in the monitoring area RG and each consists of a plurality of pixels. The image comparing unit 607 may correct misorientation or the like of the monitoring areas RG.

In Figure 5, the image comparing unit 607 defines areas displayed in a grid pattern as the monitoring areas RG, and calculates motion vectors for all the blocks B (macro blocks) in the monitoring areas RG. For example, if there is a change in the monitoring areas RG, motion vectors are generated, but if there is no change, motion vectors are not generated (or the absolute values of the motion vectors are minute). In addition to objects to be actually monitored, the image frames include background images. The background images included in the first and second image frames are almost the same. Thus, the image comparing unit 607, for example, sets difference values between those background images to threshold values and determines whether or not a change has occurred in the monitoring areas RG by comparison with the threshold values.

Figure 6 is a diagram illustrating an exemplary method of abnormality determination. The graph in Figure 6 shows a difference change amount over time in Figure 5. The difference change amount is the sum of the absolute values of respective motion vectors for the blocks B. The vertical axis of the graph indicates the difference change amount. The horizontal axis of the graph indicates time. Alternatively, the horizontal axis of the graph may indicate the car position, the number of pairs of image frames being compared, or the like. L1 shows an example of the difference change amount between first image frames and second image frames. L2 indicates a predetermined value (threshold value) for the difference change amount. L1 is time-series data and L2 is a constant value that is independent of time.

At t1 shown in Figure 6, the signs RF1 and RF2 have not appeared in image frames yet, and therefore the difference change amount L1 is low. At t2, the sign RF1 in a first image frame is bent with respect to the sign RF1 in a second image frame, which leads to an increase in the difference change amount L1. At t3, the railroad car RV approaches the signs RF1 and RF2. In this case, the signs RF1 and RF2 are enlarged in the monitoring areas RG. Accordingly, the motion vectors and the difference change amount are further increased. At t4, the railroad car RV passes the signs RF1 and RF2. Since the signs RF1 and RF2 are not in the monitoring areas RG any more, the difference change amount L1 decreases. The image comparing unit 607 compares the difference change amount L1 and the predetermined value L2 to diagnose abnormalities in the signs RF1 and RF2.

The image comparing unit 607 determines that the railroad equipment to be diagnosed is abnormal if the absolute values of motion vectors are equal to or larger than the predetermined value L2 for a predetermined period of time. By configuring the predetermined period of time, it is possible to perform abnormality determination while eliminating the effects of noise and objects moving near the track R. The predetermined period of time may be, for example, one second. The predetermined period of time may be changed depending on the running speed, frame rate of the videos, etc. For example, if the predetermined period of time is too short, it may be determined that the railroad equipment is abnormal due to noise. In contrast, if the predetermined period of time is too long, the railroad car RV may pass the railroad equipment before it is determined that the railroad equipment is abnormal. The predetermined value L2 is set based on a background difference amount, which is the absolute value of motion vectors for background portions. For example, the predetermined value L2 is a certain value plus the background difference amount. The image comparing unit 607 calculates the difference amount attributed to background portions that do not include the railroad equipment in the monitoring areas RG. This allows for recognition of changes in the railroad equipment independently of changes in the background portions. This also enables more accurate diagnosis of the railroad equipment. The predetermined period of time may be specified by the number of pairs of image frames being compared. The predetermined period of time and the predetermined value L2 are set in advance.

In particular, the image comparing unit 607 determines that the railroad equipment to be diagnosed is abnormal if the sum of absolute values for each of a plurality of blocks B is equal to or larger than the predetermined value L2 for the predetermined period of time.

More specifically, the image comparing unit 607 determines that the railroad equipment to be diagnosed is abnormal if absolute values, which increase as the railroad car RV approaches the railroad equipment, are equal to or larger than the predetermined value L2 for the predetermined period of time.

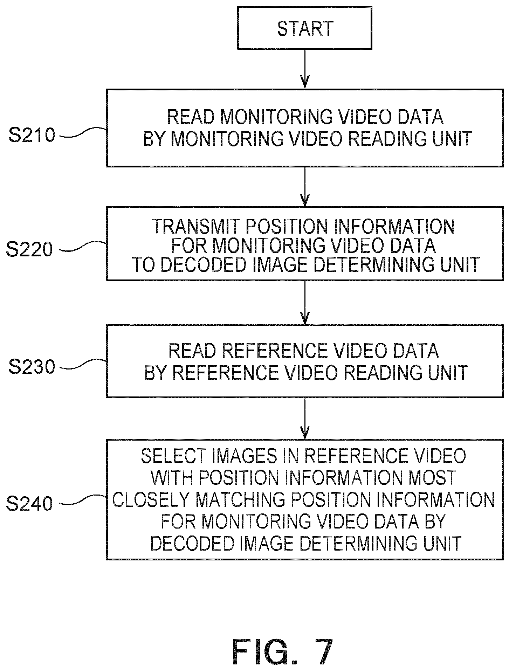

Figure 7 is a flow diagram illustrating the operation of the monitoring video reading unit 603, the reference video reading unit 602, and the decoded image determining unit 604 according to the first embodiment.

In step S210, the monitoring video reading unit 603 reads monitoring video data. In step S220, the monitoring video reading unit 603 transmits position information for each of encoded image frames (first encoded image frames) that constitute the monitoring video data to the decoded image determining unit 604. In step S230, the monitoring video reading unit 603 reads reference video data. In step S240, the decoded image determining unit 604 selects, from the reference video data, the encoded image frames (second encoded image frames) corresponding to the respective closest positions (matching positions) to the position information corresponding to the first encoded image frames. The selected encoded image frames correspond to the selected images. Second image frames obtained by decoding the selected second encoded image frames are images compared with first image frames obtained by decoding the first encoded image frames.

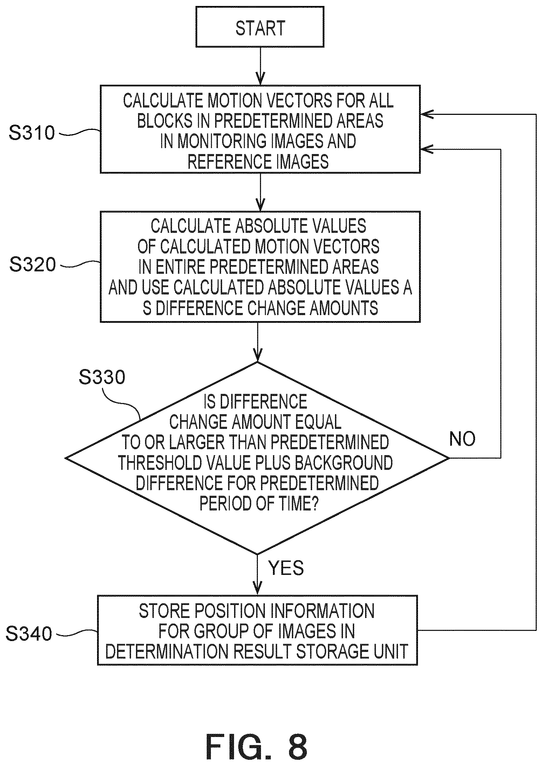

Figure 8 is a flow diagram illustrating the operation of the image comparing unit 607 and the result storage controlling unit 608 according to the first embodiment.

In step S310, the image comparing unit 607 calculates motion vector quantities for all the blocks B (macro blocks) in predefined monitoring areas RG using any first image frames obtained by decoding first encoded image frames and second image frames obtained by decoding second encoded image frames selected by the decoded image determining unit 604. In step S320, the image comparing unit 607 calculates the absolute values of the calculated motion vectors for the entire monitoring areas RG, and uses the calculated absolute values as difference change amounts.

In step S330, the image comparing unit 607 determines whether the difference change amount in the monitoring areas RG is larger than a threshold value (predetermined value L2) for a predetermined period of time. If the difference change amount is larger than the threshold value (predetermined value L2) set for the predetermined period of time (YES in S330), the image comparing unit 607 determines that an abnormality has occurred in railroad equipment in the monitoring areas RG. After that, step S340 is performed. Otherwise, if the difference change amount is not larger than the threshold value (predetermined value L2) set for the predetermined period of time (NO in S330), step S310 is performed again. In step S340, the result storage controlling unit 608 stores the position information for first image frames where an abnormality is determined to have occurred in the diagnostic result storage unit 608a. Alternatively, in step S330, the image comparing unit 607 may determine whether the difference change amount is equal to or larger than the predetermined value L2 for a predetermined number of pairs of image frames to be compared consecutively.

As described above, according to the first embodiment, the decoded image determining unit 604 selects, based on position information associated with first encoded image data, second encoded image frames from encoded reference video data previously stored in the data storage unit 601. The image comparing unit 607 calculates motion vectors between monitoring areas RG included in decoded first image frames and monitoring areas RG included in decoded second image frames, and diagnoses abnormalities in railroad equipment based on the motion vectors. This enables efficient detection of abnormalities in railroad equipment.

The encoding unit 201 associates monitoring video shot by the camera 10 with position information, and encodes each of image frames constituting the monitoring video.

The ground diagnosing device 100b is not necessarily installed outside the railroad car RV, and may be installed in the on-board diagnosing device 100a. In this case, the on-board diagnosing device 100a can diagnose railroad equipment in real time.

A display controlling unit may further be provided, which controls the display unit to display at least one of diagnostic results of the image comparing unit 607 and the position information of a piece of railroad equipment determined to be abnormal. This allows a user to send personnel to the site of the abnormality to perform maintenance work or the like.

In addition to position information, time information and environmental information may also be associated with first and second encoded image frames. Time information is, for example, information indicating time of day. Time information is used as auxiliary information when the first image frames and the second image frames are compared. For example, if a monitoring video was shot during the day and a reference video was shot at night, difference in luminance is large even if the subjects to be shot are the same. This problem can be addressed by using time information to check for times of day at which a monitoring video and a reference video were shot and select a reference video that was shot at about the same time of day as a monitoring video was shot. Environmental information includes, for example, weather (sunny, cloudy, rainy, snowy, etc.) at the time of shooting. As shown in Figure 2, the position measuring device 30 measures time information, for example. Environmental information may be obtained externally via the wireless communication unit 501. The position information obtaining unit 202 obtains time information and environmental information. The encoding unit 201 associates position information, time information, and environmental information with first encoded frames, for example. Reference video data includes multiple pieces of video data shot under different environmental conditions such as time and weather.

If a monitoring video and a reference video were shot at the same time of day, the image comparing unit 607 may diagnose abnormalities of railroad equipment by using the luminance change between the videos in combination with motion vectors. In particular, the image comparing unit 607 calculates the luminance difference in the areas including the railroad equipment. If a first image frame and a second image frame are image frames shot at the same time of day, the luminance difference between those image frames is sufficiently minute even if weather or the like is different. Therefore, when the luminance difference is large, it is possible to detect loss of part or all of a piece of railroad equipment, a foreign object adhering to a piece of railroad equipment, and a tree overhanding a piece of railroad equipment in the monitoring video. Furthermore, if the change amount of motion vector quantities is used in combination with the luminance difference, abnormalities can be detected more accurately.

### (Second Embodiment)

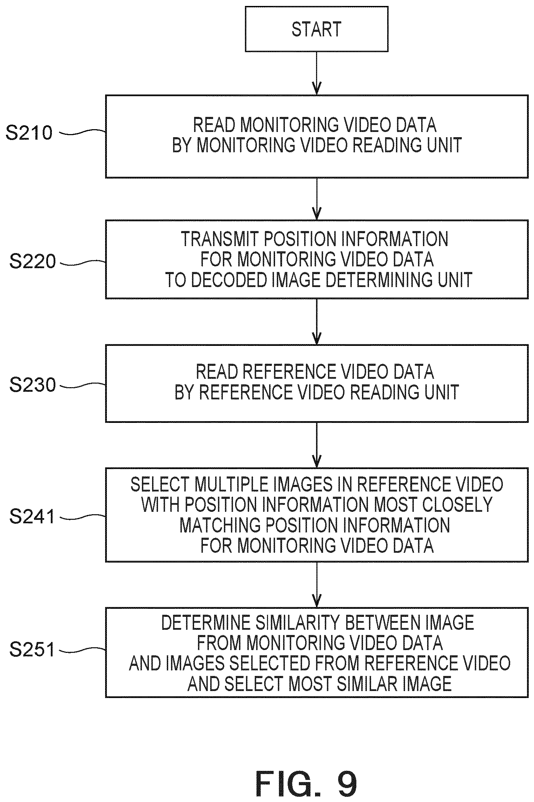

Figure 9 is a flow diagram illustrating the operation of a monitoring video reading unit 603, a reference video reading unit 602, a decoded image determining unit 604, and an image comparing unit 607 according to a second embodiment. The second embodiment differs from the first embodiment in that, during image comparison, more similar images are compared with the use of pattern matching.

The decoded image determining unit 604 determines the decoding position of reference video based on the car position (position information) of a railroad car RV obtained from encoded monitoring video data. The image comparing unit 607 extracts, for example, five second decoded image frames at positions before and after the position information. That is, the image comparing unit 607 extracts from second decoded image frames a plurality of extracted images associated with positions within a predetermined range from a first car position. The image comparing unit 607 calculates similarity by using a certain first decoded image frame in monitoring video data and the plurality of second decoded image frames (extracted images). The image comparing unit 607 selects the extracted image with the highest similarity to the first decoded image frame. That is, the image comparing unit 607 selects an extracted image that is similar to the first decoded image frame by pattern matching between those images. The image comparing unit 607 calculates motion vectors between the first decoded image frame and the selected extracted image. It is noted that the image comparing unit 607 calculates similarity not only in monitoring areas RG, but in the entire image. Thus, pattern matching can be performed based on, for example, a prominent building in images. More particularly, similarity is measured by normalized cross correlation (NCC). Normalized cross correlation is indicated by a value from -1.0 to 1.0, with 1.0 indicating the highest similarity. The accuracy of determination can be improved by diagnosing the equipment using motion vectors based on first decoded image frames and second decoded image frames with high similarity.

The configuration of other part of the equipment diagnosing system 100 according to the second embodiment is similar to the configuration of the corresponding part of the equipment diagnosing system 100 according to the first embodiment and therefore is not described in detail again.

In the flow diagram shown in Figure 9, steps S210 to S230 are the same as in Figure 7.

After step S230, in step S241, the decoded image determining unit 604 determines the decoding position of the reference video so that the decoding position is the closest to the shooting start position of the encoded monitoring video data. Then, a monitoring video decoding unit 605 decodes the monitoring video to generate first decoded image frames. At the same time, a reference video decoding unit 606 decodes the reference video to generate second decoded image frames. The first and second decoded image frames are transmitted to the image comparing unit 607. In step S251, the image comparing unit 607 selects a plurality of second decoded image frames for a certain first decoded image frame, determines similarity between the selected images and the first decoded image, and selects the most similar image.

As described in the first embodiment, the image comparing unit 607 calculates motion vectors while adjusting the playback speed. Even if the playback speed is adjusted, the image frames may not match. This is because, for example, measured car positions are different between the reference video and the monitoring video as described in the first embodiment, or different sampling rates are used in the camera 10 and the position measuring device 30. For the different sampling rates, for example, the camera 10 captures 30 image frames per second, while the position measuring device 30 captures 15 pieces of data per second. In this case, the same position information is associated with two image frames. Thus, position information that differs from the actual position may be associated with an image frame. The higher the running speed of the railroad car RV in both the monitoring and reference videos is, the longer the interval of measurement of the car position becomes, which further increases the effects of the above-described different sampling rates and different measured car positions.

The second embodiment improves the accuracy of matching a monitoring video with a reference video by selecting the image with the greatest similarity from multiple images. As a result, the accuracy of abnormality diagnosis for railroad equipment can be improved. The image comparing unit 607 calculates normalized cross correlation using videos as vectors. This reduces errors (effects) due to luminance in the environments when similarity is determined.

The equipment diagnosing system 100 according to the second embodiment has the same effect as that achieved by the first embodiment.

### (Third Embodiment)

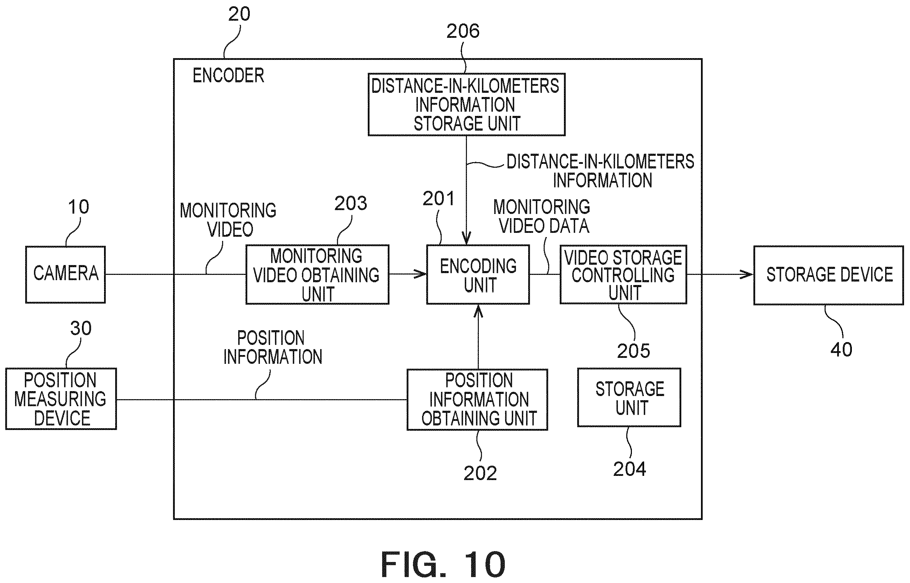

Figure 10 is a block diagram illustrating a configuration of an encoder 20 according to a third embodiment. The third embodiment differs from the first embodiment in that distance-in-kilometers information is used to locate railroad equipment.

The encoder 20 further includes a distance-in-kilometers information storage unit 206.

The distance-in-kilometers information storage unit 206 stores distance-in-kilometers information for each piece of railroad equipment in advance. Distance-in-kilometers information is information owned by a railroad administrator and indicates the positions of railroad equipment with reference to a certain position on a travel path (track R). For example, the reference position is a station. In this case, distance-in-kilometers information indicates the distance of a certain piece of railroad equipment from a certain station.

An encoding unit 201 associates car positions and distance-in-kilometers information with a video.

A decoded image determining unit 604 selects, based on a first car position and first distance-in-kilometers information associated with a monitoring video, selected images from an encoded video previously stored in a data storage unit 601 in association with car positions and distance-in-kilometers information.

The configuration of other part of the equipment diagnosing system 100 according to the third embodiment is similar to the configuration of the corresponding part of the equipment diagnosing system 100 according to the first embodiment and therefore is not described in detail again.

The use of distance-in-kilometers information in addition to position information can improve the accuracy of locating railroad equipment. This allows for more accurate selection of selected images from a reference video. This also makes it easier to search a playback position when a video is played back by an image comparing unit 607.

A result storage controlling unit 608 may control a diagnostic result storage unit 608a to store the distance-in-kilometers information corresponding to a piece of railroad equipment determined to be abnormal. This facilitates confirmation of an abnormal piece of railroad equipment.

In addition, wheel spin detection can also be performed by detecting a gap between the car position and the distance-in-kilometers caused by wheel spin.

The equipment diagnosing system 100 according to the third embodiment has the same effect as that achieved by the first embodiment. The equipment diagnosing system 100 according to the third embodiment may be combined with the second embodiment.

## Claims

1. An equipment diagnosing system (100) comprising:
a video shooting unit (10) that is mounted on a railroad car (RV) and shoots a video of a piece of railroad equipment installed along a travel path (R) of the railroad car (RV);
a position measuring unit (30) that measures a car position of the railroad car (RV) while the railroad car (RV) is running;
an encoding unit (201) that associates the video shot by the video shooting unit (10) with the car position and encodes the video;
a first video decoding unit (605) that decodes a first video extracted from the encoded video, the first video including the piece of railroad equipment to be diagnosed;
an image selecting unit (604) that selects, based on a first car position associated with the first video, a selected image of the piece of railroad equipment to be diagnosed from the encoded video previously stored in a video storage unit (601) in association with the car position;
a second video decoding unit (606) that decodes a second video of the piece of railroad equipment to be diagnosed corresponding to the selected image; and
**characterized in that** an image comparing unit (607) that calculates motion vectors between the selected image and a second image included in the decoded second video, and diagnoses an abnormality in the piece of railroad equipment based on the motion vectors,
wherein the image comparing unit (607) determines that the piece of railroad equipment to be diagnosed is abnormal if absolute values of the motion vectors, which increase as the railroad car (RV) approaches the piece of railroad equipment, are equal to or larger than a predetermined value for a predetermined period of time.

2. The equipment diagnosing system (100) according to claim 1, wherein the image comparing unit (607) calculates the motion vectors with the car position associated with the selected image corresponding to the car position associated with the second image.

3. The equipment diagnosing system (100) according to claim 1, wherein the image comparing unit (607)
calculates the motion vectors for each of a plurality of blocks (B) that divide a predetermined area in the selected image and the second image, and
determines that the piece of railroad equipment to be diagnosed is abnormal if a sum of the absolute values for each of the plurality of blocks (B) is equal to or larger than the predetermined value for the predetermined period of time.

4. The equipment diagnosing system (100) according to any one of claims 1 to 3, further comprising a result storage controlling unit that controls a diagnostic result storage unit to store the car position corresponding to the piece of railroad equipment determined to be abnormal.

5. The equipment diagnosing system (100) according to any one of claims 1 to 4, wherein the image selecting unit (604) selects the selected image associated with a closest position to the first car position.

6. The equipment diagnosing system (100) according to any one of claims 1 to 5, wherein the image comparing unit (607)
extracts from the second image a plurality of extracted images associated with positions within a predetermined range from the first car position,
calculates similarity between the selected image and the plurality of extracted images, and
calculates the motion vectors between the selected image and one of the plurality of extracted images with highest similarity.

7. The equipment diagnosing system (100) according to claim 6, wherein the similarity is normalized cross correlation.

8. The equipment diagnosing system (100) according to any one of claims 1 to 7, wherein the encoding unit (201) associates the car position and distance-in-kilometers information indicating a position of the piece of railroad equipment with reference to a certain position on the travel path (R) with the video, and
the image selecting unit (604) selects, based on the first car position and first distance-in-kilometers information associated with the first video, the selected image from the encoded video previously stored in the video storage unit (601) in association with the car position and the distance-in-kilometers information.

## Patentansprüche

1. Ausrüstungsdiagnosesystem (100), umfassend:
eine Videoaufnahmeeinheit (10), die an einem Eisenbahnwagen (RV) montiert ist und ein Video von einem Stück einer Eisenbahnausrüstung aufnimmt, entlang einer Fahrstrecke (R) des Eisenbahnwagens (RV) installiert ist;
eine Positionsmesseinheit (30), die die Wagenposition des Eisenbahnwagens (RV) misst, während der Eisenbahnwagen (RV) fährt;
eine Codiereinheit (201), die das durch die Videoaufnahmeeinheit (10) aufgenommene Video mit der Wagenposition verknüpft und das Video codiert;
eine erste Videodecodiereinheit (605), die ein aus dem codierten Video extrahiertes erstes Video decodiert, wobei das erste Video das zu diagnostizierende Stück einer Eisenbahnausrüstung enthält;
eine Bildauswahleinheit (604), die auf der Grundlage einer mit dem ersten Video verknüpften ersten Wagenposition ein ausgewähltes Bild des zu diagnostizierenden Stücks einer Eisenbahnausrüstung aus dem codierten Video auswählt, das zuvor in einer Videospeichereinheit (601) in Verknüpfung mit der Wagenposition gespeichert wurde;
eine zweite Videodecodiereinheit (606), die ein dem ausgewählten Bild entsprechendes zweites Video des zu diagnostizierenden Stücks einer Eisenbahnausrüstung decodiert; und
**dadurch gekennzeichnet, dass** eine Bildvergleichseinheit (607), die Bewegungsvektoren zwischen dem ausgewählten Bild und einem in dem decodierten zweiten Video enthaltenen zweiten Bild berechnet und auf der Grundlage der Bewegungsvektoren eine Anomalie in dem Stück einer Eisenbahnausrüstung diagnostiziert,
wobei die Bildvergleichseinheit (607) bestimmt, dass das zu diagnostizierende Stück einer Eisenbahnausrüstung anormal ist, falls die Absolutwerte der Bewegungsvektoren, die in dem Maße zunehmen, wie sich der Eisenbahnwagen (RV) dem Stück einer Eisenbahnausrüstung nähert, über einen zuvor festgelegten Zeitraum gleich einem oder größer als ein zuvor festgelegter Wert sind.

2. Ausrüstungsdiagnosesystem (100) nach Anspruch 1, wobei die Bildvergleichseinheit (607) die Bewegungsvektoren berechnet, während die Wagenposition mit dem ausgewählten Bild verknüpft ist, das der mit dem zweiten Bild verknüpften Wagenposition entspricht.

3. Ausrüstungsdiagnosesystem (100) nach Anspruch 1, wobei die Bildvergleichseinheit (607)
die Bewegungsvektoren für jeden von mehreren Blöcken (B) berechnet, die einen zuvor festgelegten Bereich in dem ausgewählten Bild und dem zweiten Bild unterteilen, und
bestimmt, dass das zu diagnostizierende Stück einer Eisenbahnausrüstung anormal ist, falls eine Summe der Absolutwerte für jeden der mehreren Blöcke (B) über den zuvor festgelegten Zeitraum gleich dem oder größer als der zuvor festgelegte Wert ist.

4. Ausrüstungsdiagnosesystem (100) nach einem der Ansprüche 1 bis 3, des Weiteren umfassend eine Ergebnisspeichersteuereinheit, die eine Diagnoseergebnisspeichereinheit so steuert, dass sie die Wagenposition speichert, die dem als anormal bestimmten Stück einer Eisenbahnausrüstung entspricht.

5. Ausrüstungsdiagnosesystem (100) nach einem der Ansprüche 1 bis 4, wobei die Bildauswahleinheit (604) das ausgewählte Bild auswählt, das mit einer der ersten Wagenposition am nächsten liegenden Position verknüpft ist.

6. Ausrüstungsdiagnosesystem (100) nach einem der Ansprüche 1 bis 5, wobei die Bildvergleichseinheit (607)
aus dem zweiten Bild mehrere extrahierte Bilder extrahiert, die mit Positionen innerhalb eines zuvor festgelegten Bereichs ab der ersten Wagenposition verknüpft sind,
eine Ähnlichkeit zwischen dem ausgewählten Bild und den mehreren extrahierten Bildern berechnet und
die Bewegungsvektoren zwischen dem ausgewählten Bild und einem der mehreren extrahierten Bilder mit der höchsten Ähnlichkeit berechnet.

7. Ausrüstungsdiagnosesystem (100) nach Anspruch 6, wobei die Ähnlichkeit eine normalisierte Kreuzkorrelation ist.

8. Ausrüstungsdiagnosesystem (100) nach einem der Ansprüche 1 bis 7, wobei die Codiereinheit (201) die Informationen zur Wagenposition und zur Distanz in Kilometern, die eine Position des Stücks einer Eisenbahnausrüstung in Bezug auf eine gewisse Position auf der Fahrstrecke (R) angeben, mit dem Video verknüpft, und
die Bildauswahleinheit (604) auf der Grundlage der Informationen zur ersten Wagenposition und zur ersten Distanz in Kilometern, die mit dem ersten Video verknüpft sind, das ausgewählte Bild aus dem codierten Video auswählt, das zuvor in der Videospeichereinheit (601) in Verknüpfung mit den Informationen zur Wagenposition und zur Distanz in Kilometern gespeichert wurde.

## Revendications

1. Système de diagnostic d'équipement (100) comprenant :
une unité de tournage de vidéo (10) qui est montée sur un wagon (RV) et tourne une vidéo d'un équipement ferroviaire installé sur un trajet de déplacement (R) du wagon (RV) ;
une unité de mesure de position (30) qui mesure une position de wagon du wagon (RV) pendant le déplacement du wagon (RV) ;
une unité d'encodage (201) qui associe la vidéo tournée par l'unité de tournage de vidéo (10) à la position de wagon et encode la vidéo ;
une première unité de décodage de vidéo (605) qui décode une première vidéo extraite de la vidéo encodée, la première vidéo incluant l'équipement ferroviaire à diagnostiquer ;
une unité de sélection d'image (604) qui sélectionne, sur la base d'une première position de wagon associée à la première vidéo, une image sélectionnée de l'équipement ferroviaire à diagnostiquer à partir de la vidéo encodée précédemment stockée dans une unité de stockage de vidéo (601) en association avec la position de wagon ;
une deuxième unité de décodage de vidéo (606) qui décode une deuxième vidéo de l'équipement ferroviaire à diagnostiquer correspondant à l'image sélectionnée ; et
**caractérisé par** une unité de comparaison d'images (607) qui calcule des vecteurs de mouvement entre l'image sélectionnée et une deuxième image incluse dans la deuxième vidéo décodée, et diagnostique une anomalie dans l'équipement ferroviaire sur la base des vecteurs de mouvement,
dans lequel l'unité de comparaison d'images (607) détermine que l'équipement ferroviaire à diagnostiquer est anormal si des valeurs absolues des vecteurs de mouvement, qui augmentent à mesure que le wagon (RV) s'approche de l'équipement ferroviaire, sont supérieures ou égales à une valeur prédéterminée pendant une période de temps prédéterminée.

2. Système de diagnostic d'équipement (100) selon la revendication 1, dans lequel l'unité de comparaison d'images (607) calcule les vecteurs de mouvement avec la position de wagon associée à l'image sélectionnée correspondant à la position de wagon associée à la deuxième image.

3. Système de diagnostic d'équipement (100) selon la revendication 1, dans lequel l'unité de comparaison d'images (607)
calcule les vecteurs de mouvement pour chacun d'une pluralité de blocs (B) qui divisent une zone prédéterminée dans l'image sélectionnée et la deuxième image, et
détermine que l'équipement ferroviaire à diagnostiquer est anormal si une somme des valeurs absolues pour chacun de la pluralité de blocs (B) est supérieure ou égale à la valeur prédéterminée pour la période de temps prédéterminée.

4. Système de diagnostic d'équipement (100) selon l'une quelconque des revendications 1 à 3, comprenant en outre une unité de commande de stockage de résultats qui commande une unité de stockage de résultats de diagnostic pour stocker la position de wagon correspondant à l'équipement ferroviaire déterminé comme étant anormal.

5. Système de diagnostic d'équipement (100) selon l'une quelconque des revendications 1 à 4, dans lequel l'unité de sélection d'image (604) sélectionne l'image sélectionnée associée à une position la plus proche de la première position de wagon.

6. Système de diagnostic d'équipement (100) selon l'une quelconque des revendications 1 à 5, dans lequel l'unité de comparaison d'images (607)
extrait, à partir de la deuxième image, une pluralité d'images extraites associées à des positions à une portée prédéterminée de la première position de wagon,
calcule une similarité entre l'image sélectionnée et la pluralité d'images extraites, et
calcule les vecteurs de mouvement entre l'image sélectionnée et l'une de la pluralité d'images extraites avec une similarité la plus élevée.

7. Système de diagnostic d'équipement (100) selon la revendication 6, dans lequel la similarité est une corrélation croisée normalisée.

8. Système de diagnostic d'équipement (100) selon l'une quelconque des revendications 1 à 7, dans lequel l'unité d'encodage (201) associe la position de wagon et des informations de distance en kilomètres indiquant une position de l'équipement ferroviaire par rapport à une certaine position sur le trajet de déplacement (R) à la vidéo, et
l'unité de sélection d'image (604) sélectionne, sur la base de la première position de wagon et des premières informations de distance en kilomètres associées à la première vidéo, l'image sélectionnée à partir de la vidéo encodée précédemment stockée dans l'unité de stockage de vidéo (601) un association avec la position de wagon et les informations de distance en kilomètres.
